# EUROPÄISCHE PATENTANMELDUNG

(11) **EP 2 756 943 A2**
(43) Veröffentlichungstag der Anmeldung: **23.07.2014**
(21) Anmeldenummer: 14000077.9
(22) Anmeldetag: 10.01.2014
(51) Int. Cl.: B29C 65/72, B29C 65/48, B29C 65/56

(54) **Verbindungsanordnung eines Silikonteils mit einem klebbaren Teil**

(30) Priorität: 18.01.2013 DE 102013000890
(71) Anmelder: ATON Systems GmbH, 40670 Meerbusch (DE)
(72) Erfinder: Meyer, Marcel, 59929 Brilon (DE)
(74) Vertreter: Philipp, Matthias

(57) **Zusammenfassung**

Verbindungsanordnung eines Silikonteils (2) mit einem klebbaren Teil (6), mit einem Zwischenelement (4), das an einer ersten Oberfläche (4a) mit dem Silikonteil (2) verbunden ist und an einer zweiten Oberfläche (4b) mit einem klebbaren Teil (6) verklebt ist, wobei die erste Oberfläche (4a) eine Haftstruktur mit Mikrohinterschneidungen aufweist, die mit dem Silikonteil (2) vergossen sind und einen mikromechanischen Formschluss zwischen dem Silikonteil (2) und dem Zwischenelement bilden (4), und Verbindungsverfahren.

## Beschreibung

Die Erfindung betrifft eine Verbindungsanordnung eines Silikonteils mit einem klebbaren Teil, wie sie beispielsweise zur Herstellung einer Silikondichtmanschette benötigt wird.

Ein Silikonteil, bestehend aus einem Silikonelastomer, kann zwar mittels einer Plasmabehandlung oberflächenaktiviert werden, so dass es geklebt werden kann, aber eine derartige Klebeverbindung hat für zahlreiche praktische Anwendungsfälle keine ausreichende Festigkeit. Die Erfindung hat sich daher zur Aufgabe gestellt, eine Verbindung zwischen einem Silikonteil und einem klebbaren Teil anzugeben, die eine befriedigende Festigkeit für praktische Zwecke aufweist.

Diese Aufgabe wird erfindungsgemäß durch eine Verbindungsanordnung eines Silikonteils mit einem klebbaren Teil gelöst, mit einem Zwischenelement, das an einer ersten Oberfläche mit dem Silikonteil verbunden ist und an einer zweiten Oberfläche mit einem klebbaren Teil verklebt ist, wobei die erste Oberfläche eine Haftstruktur mit Mikrohinterschneidungen aufweist, die mit dem Silikonteil vergossen sind und einen mikromechanischen Formschluss zwischen dem Silikonteil und dem Zwischenelement bilden. Damit erfolgt erfindungsgemäß die Anbindung des Silikonteils an das klebbare Teil nicht mittels einer an dem Silikonteil angreifenden Klebeverbindung, sondern unmittelbar durch mikromechanischen Formschluss zwischen dem Silikonmaterial des Silikonteils und dem Zwischenelement, welches an seiner Kontaktfläche zu dem Silikonmaterial eine spezielle Haftstruktur aufweist. Das Zwischenelement bildet somit einen Adapter und ist an seiner zweiten Oberfläche, die gut klebbar ist, mit einem klebbaren Teil verklebt, so dass eine feste Verbindung zwischen dem Silikonteil und dem klebbaren Teil gebildet ist.

Bevorzugt sind die Mikrohinterschneidungen unregelmäßig ausgebildet. Typische Abmessungen der Mikrohinterschneidungen wie Länge oder Tiefe einerseits und Querschnittsfläche andererseits können jeweils statistisch um einen Mittelwert verteilt sein, beispielsweise entsprechend einer Normalverteilung.

Das Silikonteil besteht allgemein aus einem Silikonelastomer, etwa einem Organopolysiloxan, wobei auch solche Silikonelastmomere eingeschlossen sind, die einen Verbundwerkstoff darstellen, z.B. mit einem Thermoplasten. Bei dem Silikonelastomer kann es sich auch um Silikonkautschuk handeln. Ferner sind Silikon-Copolymere umfaßt.

Bevorzugt ist vorgesehen, dass die erste Oberfläche des Zwischenelements fluiddicht mit dem Silikonteil vergossen ist. Zweckmäßigerweise kann dann kein Fluiddurchtritt entlang der ersten Oberfläche oder quer dazu erfolgen.

Das Zwischenelement kann an der zweiten Oberfläche mit einem starren oder flexiblen klebbaren Bauteil verklebt sein, bei dem es sich um ein textiles Material handeln kann.

Die erste Oberfläche kann mikrostrukturelle, Mikrohinterschneidungen bildende Vorsprünge aufweisen. Alternativ oder zusätzlich kann die erste Oberfläche mikrostrukturelle, Mikrohinterschneidungen bildende Vertiefungen aufweisen.

Die erste Oberfläche kann Textil- oder Sondergewirke wie Frottee, Velcro, Plüsch, Kevlar oder Armatex aufweisen.

Es kann vorgesehen sein, dass das Zwischenelement aus Neopren (Chloroprenkautschuk) besteht, das zur Bildung der ersten Oberfläche mit einer Haftschicht aus Textil- oder Sondergewirk beschichtet sein kann.

Bevorzugt sieht die Erfindung vor, dass an der ersten Oberfläche im Mittel mindestens 100, 1000, 5000 oder 10000 Mikrohinterschneidungen je cm² angeordnet sind. Zur Erhöhung der Festigkeit kann vorgesehen sein, dass das Silikonteil, das Zwischenelement und gegebenenfalls auch das klebbare Teil miteinander vernäht sind, wobei die Nähte abgedichtet sein können.

Das Silikonteil kann eine Silikondichtmanschette sein, insbesondere für einen Trockentauchanzug, wobei das klebbare Teil ein Hals-, Arm- oder Beinteil eines Trockentauchanzugs sein kann, das wasserdicht mit der Silikondichtmanschette zu verbinden ist.

Das Zwischenelement kann bandförmig sein, wobei die erste Oberfläche eine erste Bandoberfläche sein kann und die zweite Oberfläche eine zweite, der ersten Bandoberfläche gegenüberliegende Bandoberfläche sein kann.

Alternativ kann die Anordnung so sein, dass das Zwischenelement bandförmig ist, während die erste Oberfläche durch einen ersten Teilbereich einer ersten Bandoberfläche des Zwischenelements gebildet wird und die zweite Oberfläche durch einen dem ersten Teilbereich benachbarten zweiten Teilbereich der ersten Bandoberfläche des Zwischenelements gebildet wird, wobei eine zweite, der ersten Bandoberfläche gegenüberliegende Bandoberfläche entweder frei bleibt oder anderen Verbindungszwecken dient. Bei einer derartigen Anordnung befinden sich das Silikonteil und das klebbare Teil benachbart zueinander auf ein und derselben Bandoberfläche des Zwischenelements, das in diesem Falle bevorzugt wasserdicht sein und eine ausreichende mechanische Festigkeit aufweisen sollte.

Die Erfindung bezieht sich weiterhin auf eine Verbindungsanordnung eines Silikonteils mit einem Zwischenelement, das an einer ersten Oberfläche mit dem Silikonteil verbunden ist und an einer zweiten Oberfläche mit einem klebbaren Teil verklebbar ist, wobei die erste Oberfläche eine Haftstruktur mit Mikrohinterschneidungen aufweist, die mit dem Silikonteil vergossen sind und einen mikromechanischen Formschluss zwischen dem Silikonteil und dem Zwischenelement bilden, zur Herstellung einer erfindungsgemäßen Verbindungsanordnung eines Silikonteils mit einem klebbaren Teil.

Die Erfindung betrifft weiterhin ein Verfahren zum Verbinden eines Silikonteils mit einem Zwischenelement, das an einer ersten Oberfläche mit dem Silikonteil verbunden wird und an einer zweiten Oberfläche mit einem klebbaren Teil verklebbar ist, wobei die erste Oberfläche eine Haftstruktur mit Mikrohinterschneidungen aufweist, die mit dem Silikonteil vergossen werden, wodurch ein mikromechanischer Formschluss zwischen dem Silikonteil und dem Zwischenelement gebildet wird, zur Bildung einer erfindungsgemäßen Verbindungsanordnung eines Silikonteils mit einem klebbaren Teil.

Zur Bildung einer erfindungsgemäßen Verbindungsanordnung eines Silikonteils mit einem klebbaren Teil wird das Zwischenelement mit einem klebbaren Teil verklebt.

Die Erfindung wird nachfolgend anhand eines Ausführungsbeispiels erläutert, wobei auf eine Zeichnung Bezug genommen wird, in der
Fig. 1 eine schematische Schnittansicht einer erfindungsgemäßen Verbindungsanordnung eines Silikonteils mit einem Zwischenelement und einem mit diesem verklebten Teil zeigt, und
Fig. 2 eine schematische Ansicht, zum Teil im Schnitt, einer erfindungsgemäßen Dichtmanschette aus Silikon mit einem Zwischenelement zur Verbindung mit einem Trockentauchanzug zeigt,
Fig. 3 den Silikonteil der Dichtmanschette allein zeigt,
Fig. 4 das Zwischenelement allein zeigt;
Fig. 5 und 6 verschiedene Ansichten der mit dem Zwischenelement verbundenen Dichtmanschette zeigen.

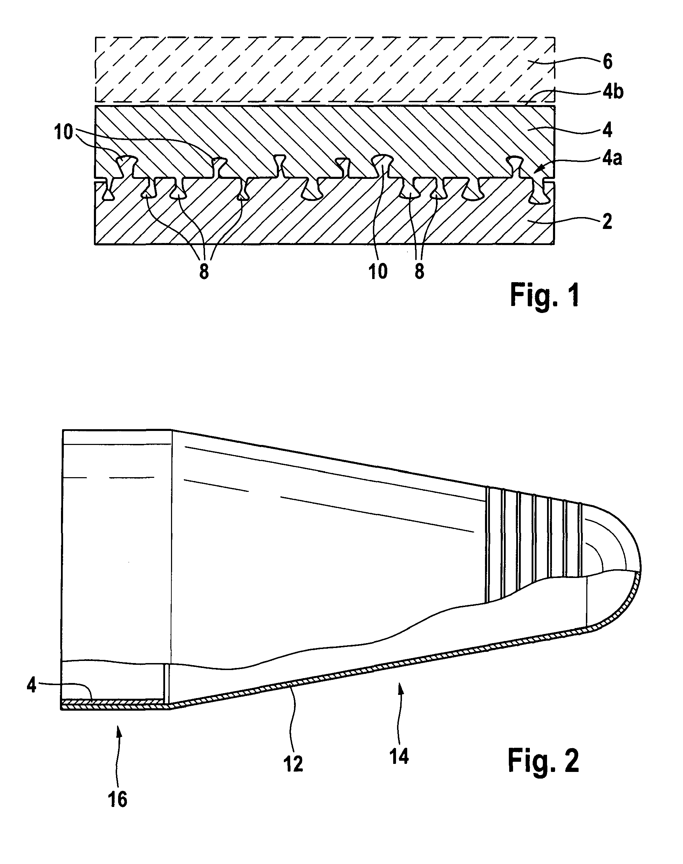

Fig. 1 erläutert schematisch eine erfindungsgemäße Verbindungsanordnung eines Silikonteils 2 mit einem Zwischenelement 4. Das Zwischenelement 4 ist an einer ersten Oberfläche 4a mit dem Silikonteil 2 verbunden und besteht aus einem klebbaren Material, so dass es an einer zweiten Oberfläche 4b mit einem klebbaren Teil 6 (gestrichelt angedeutet) verklebt werden kann. Die erste Oberfläche 4a weist eine Haftstruktur mit Mikrohinterschneidungen auf. Die Mikrohinterschneidungen können durch mikrostrukturelle Vorsprünge 8 des Zwischenelements 4 gebildet sein, wie beispielsweise dadurch, dass das Zwischenelement eine textile Oberfläche oder Kaschierung aus einem faserigen Textil- oder Sondergewirke wie Frottee, Velcro, Plüsch, Kevlar oder Armatex aufweist. Die Vorsprünge können aus dem Material des Zwischenelements bestehen oder aus einem unterschiedlichen Material. Sie können auf das Zwischenelement aufgebracht sein oder durch Bearbeitung des Zwischenelements oder bei der Herstellung des Zwischenelements erzeugt sein. Alternativ oder zusätzlich kann die erste Oberfläche 4a mit mikrostrukturellen Vertiefungen 10 versehen sein, die Mikrohinterschneidungen bilden, was ebenfalls durch eine Kaschierung mit einer textilen Oberfläche erreicht werden kann, oder durch Bearbeitung oder im Zuge der Herstellung, beispielsweise durch Erzeugung offener Poren.

An der ersten Oberfläche 4a befinden sich im Mittel mindestens 10, 100, 500, 1000, 5000 oder 10000 Mikrohinterschneidungenje cm². Eine typische Abmessung der Vorsprünge 8 und/oder Vertiefungen 10, etwa Durchmesser oder Länge bzw. Tiefe, beträgt bevorzugt weniger als 1 mm, 0,5 mm, 0,1 mm, 0,05 mm oder 0,01 mm.

Das Silikonteil 2 wird mit dem Zwischenelement 4 vergossen, oder das Zwischenelement 4 wird in das Silikonteil 2 eingegossen, je nachdem ob es sich bei dem Silikonteil um ein Form-oder Tauchgussteil handelt. Das flüssige oder fließfähige Silikonmaterial fließt um oder in die Mikrohinterschneidungen der ersten Oberfläche 4a, wobei die die Mikrohinterschneidungen bildenden Vorsprünge der ersten Oberfläche in dem Silikonmaterial ganz oder teilweise eingebettet werden und/oder die die Mikrohinterschneidungen bildenden Vertiefungen von dem Silikonmaterial ganz oder teilweise ausgefüllt werden.

Nach dem Aushärten des Silikonmaterials ist das Silikonteil 2 mikroformschlüssig fest mit dem Zwischenelement 4 verbunden. Vor, gleichzeitig mit oder nach dem Verbinden des Silikonteils 2 mit dem Zwischenelement 4 kann das Zwischenelement an der zweiten Oberfläche 4b mit einem klebbaren Teil 6 verklebt werden. Wenn das Zwischenelement, wie die Erfindung bevorzugt vorsieht, aus Neopren bzw. Chloroprenkautschuk besteht, ist eine Verklebung mit einem weiteren Neoprenteil oder mit einem Textilmaterial problemlos möglich.

Zur Steigerung der Verbindungsfestigkeit kann das Silikonteil 2 mit dem Zwischenelement 4, das Zwischenelement 4 mit dem klebbaren Teil 6 oder alle drei Teile miteinander vernäht werden. Die Nähte können wasserdicht abgedichtet werden.

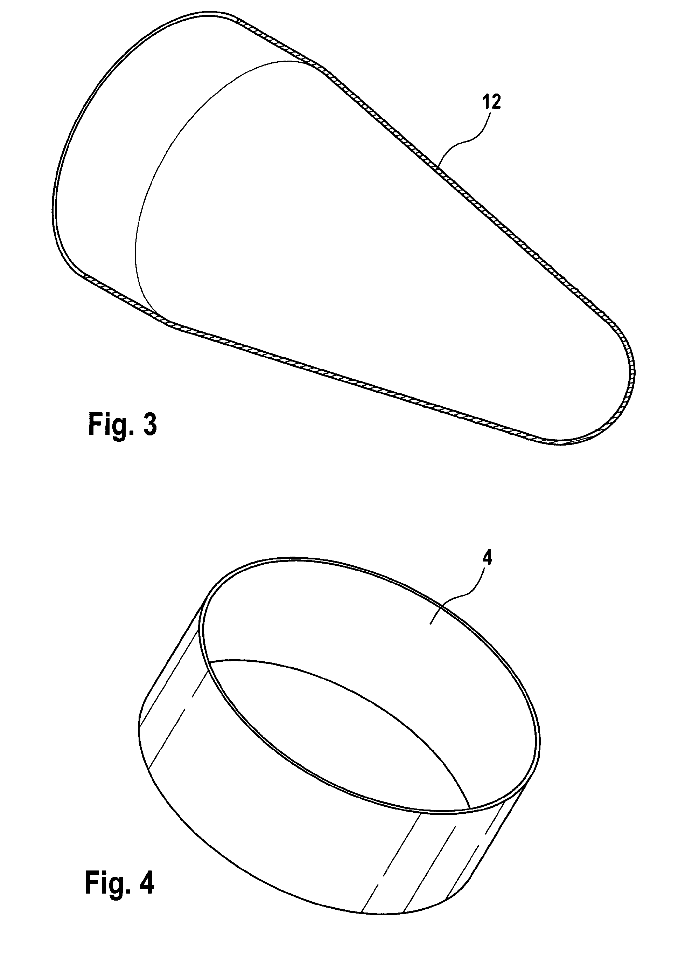

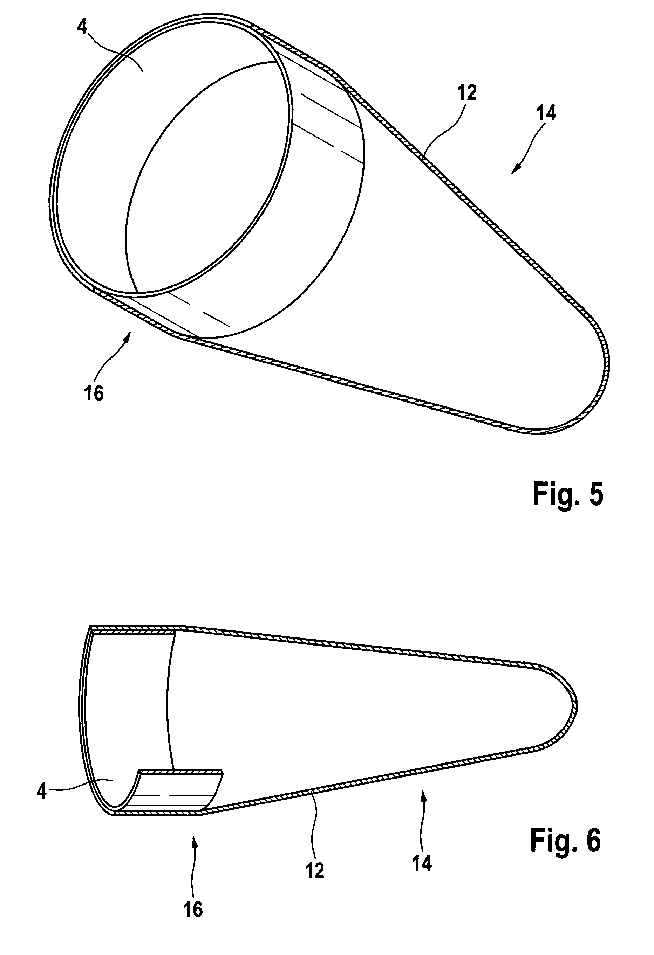

Fig. 2 bis 6 zeigen eine teilweise geschnittene Ansicht einer Silikondichtmanschette 12 sowie Ansichten eines Zwischenelements, zur Anbringung an einem Ärmel eines Tauchanzugs, um diesen im Bereich des Handgelenks eines Tauchers flexibel abzudichten. Die Silikondichtmanschette 12 weist einen Handbereich 14 und einen zylindrischen Dichtbereich 16 auf. Innerhalb des Dichtbereichs 16 ist die Silikondichtmanschette 12 innenseitig mit einem Zwischenelement 4 versehen, das wie beschrieben mittels mikromechanischem Formschluss mit dem äußeren Silikonmaterial verbunden ist, das den Handbereich 14 bildet.

### Bezugszeichenliste

- 2: Silikonteil
- 4: Zwischenelement
- 4a: erste Oberfläche
- 4b: zweite Oberfläche
- 6: klebbares Teil
- 8: Vorsprung
- 10: Vertiefung
- 12: Silikondichtmanschette
- 14: Handbereich
- 16: Dichtungsbereich

## Patentansprüche

1. Verbindungsanordnung eines Silikonteils (2) mit einem klebbaren Teil (6), mit einem Zwischenelement (4), das an einer ersten Oberfläche (4a) mit dem Silikonteil (2) verbunden ist und an einer zweiten Oberfläche (4b) mit einem klebbaren Teil (6) verklebt ist, wobei die erste Oberfläche (4a) eine Haftstruktur mit Mikrohinterschneidungen aufweist, die mit dem Silikonteil (2) vergossen sind und einen mikromechanischen Formschluss zwischen dem Silikonteil (2) und dem Zwischenelement (4) bilden.

2. Verbindungsanordnung nach Anspruch 1, **dadurch gekennzeichnet, dass** die erste Oberfläche (4a) fluiddicht mit dem Silikonteil (2) vergossen ist.

3. Verbindungsanordnung nach Anspruch 1 oder 2, **dadurch gekennzeichnet, dass** das Zwischenelement (4) an der zweiten Oberfläche mit einem flexiblen oder starren klebbaren Teil (6) verklebt ist.

4. Verbindungsanordnung nach einem der vorangehenden Ansprüche, **dadurch gekennzeichnet, dass** die erste Oberfläche (4a) mikrostrukturelle, Mikrohinterschneidungen bildende Vorsprünge (8) aufweist.

5. Verbindungsanordnung nach einem der vorangehenden Ansprüche, **dadurch gekennzeichnet, dass** die erste Oberfläche (4a) mikrostrukturelle, Mikrohinterschneidungen bildende Vertiefungen aufweist.

6. Verbindungsanordnung nach einem der vorangehenden Ansprüche, **dadurch gekennzeichnet, dass** die erste Oberfläche (4a) Textil- oder Sondergewirke wie Frottee, Velcro, Plüsch, Kevlar oder Armatex aufweist.

7. Verbindungsanordnung nach einem der vorangehenden Ansprüche, **dadurch gekennzeichnet, dass** das Zwischenelement (4) aus Neopren (Chloroprenkautschuk) besteht, das zur Bildung der ersten Oberfläche (4a) mit einer Haftschicht aus Textil- oder Sondergewirk beschichtet sein kann.

8. Verbindungsanordnung nach einem der vorangehenden Ansprüche, **dadurch gekennzeichnet, dass** an der ersten Oberfläche (4a) im Mittel mindestens 10, 100, 500, 1000, 5000 oder 10 000 Mikrohinterschneidungen je cm² angeordnet sind.

9. Verbindungsanordnung nach einem der vorangehenden Ansprüche, **dadurch gekennzeichnet, dass** das Silikonteil (2) und das Zwischenelement (4) und gegebenenfalls das klebbare Teil (6) miteinander vernäht sind.

10. Verbindungsanordnung nach einem der vorangehenden Ansprüche, **dadurch gekennzeichnet, dass** das Silikonteil (2) eine Silikondichtmanschette (12) ist, insbesondere für einen Trockentauchanzug.

11. Verbindungsanordnung eines Silikonteils (2) mit einem Zwischenelement (4), das an einer ersten Oberfläche (4a) mit dem Silikonteil (2) verbunden ist und an einer zweiten Oberfläche (4b) mit einem klebbaren Teil (6) verklebbar ist, wobei die erste Oberfläche (4a) eine Haftstruktur mit Mikrohinterschneidungen aufweist, die mit dem Silikonteil (2) vergossen sind und einen mikromechanischen Formschluss zwischen dem Silikonteil (2) und mit Zwischenelement (4) bilden, zur Herstellung einer Verbindungsanordnung nach einem der vorangehenden Ansprüche.

12. Verfahren zum Verbinden eines Silikonteils (2) mit einem Zwischenelement (4), das an einer ersten Oberfläche (4a) mit dem Silikonteil (2) verbunden wird und an einer zweiten Oberfläche (4b) mit einem klebbaren Teil (6) verklebbar ist, wobei die erste Oberfläche (4a) eine Haftstruktur mit Mikrohinterschneidungen aufweist, die mit dem Silikonteil (2) vergossen werden, wodurch ein mikromechanischer Formschluss zwischen dem Silikonteil (2) und dem Zwischenelement (4) gebildet wird, zur Bildung einer Verbindungsanordnung nach einem der vorangehenden Ansprüche.

13. Verfahren nach Anspruch 12, **dadurch gekennzeichnet, dass** das Zwischenelement (4) an der zweiten Oberfläche (4b) mit einem klebbaren Teil (6) verklebt wird.
